# EUROPEAN PATENT APPLICATION

(11) **EP 2 602 526 A1**
(43) Date of publication of application: **12.06.2013**
(21) Application number: 11814303.1
(22) Date of filing: 04.08.2011
(51) Int. Cl.: F16K 31/06, F02M 21/02, H01M 8/04

(54) **GAS PRESSURE REGULATING VALVE**

(30) Priority: 06.08.2010 JP 2010177869
(71) Applicant: Kawasaki Jukogyo Kabushiki Kaisha, Kobe-shi, Hyogo 650-8670 (JP)
(72) Inventor: NOMICHI, Kaoru, Hyogo 651-2239 (JP); SUZUKI, Yutaka, Hyogo 651-2239 (JP); NINOMIYA, Makoto, Hyogo 651-2239 (JP)
(74) Representative: Piésold, Alexander James
(86) International application number: PCT/JP2011/004439
(87) International publication number: WO 2012/017668

(57) **Abstract**

The present invention provides a gas pressure regulating valve capable of, even under a high-pressure fuel gas circumstance, more precisely regulating secondary pressure of the high-pressure fuel gas to target pressure and preventing the fuel gas from leaking to the atmosphere.

An electromagnetic pressure regulating valve 1 is an in tank type and can cause a valve body 17 to move by an electromagnetic proportional solenoid 31 to adjust an opening degree of a valve passage 46, thereby regulating secondary pressure p₂ to target pressure. A diaphragm seal 21 and a low-pressure sealing member 22 respectively seal both sides of a bearing member 20 slidingly supporting the valve body 17. The diaphragm seal 21 receives the secondary pressure p₂ from a pressure return chamber 25 to cause the valve body 17 to move toward a closed position. A back pressure chamber 27 connected to a primary port 41 is formed in the valve body 17 by a seal rod 26 inserted in the valve body 17. A communication passage 30 connected to a secondary port 12b is formed at a side of the seal rod 26, and a high-pressure sealing member 29 seals between the communication passage 30 and the back pressure chamber 27.

## Description

### Technical Field

The present invention relates to a gas pressure regulating valve configured to regulate the pressure of a high-pressure fuel gas to pressure corresponding to an applied voltage or an applied current.

### Background Art

Clean energy vehicles using fuel gases, such as a hydrogen gas and a natural gas, are known, and examples thereof include fuel-cell vehicles, hydrogen engine vehicles, and natural gas vehicles. The clean energy vehicle includes a high-pressure tank and one of an injector and an electromagnetic pressure regulating valve and runs in such a manner that the fuel gas stored in the high-pressure tank is supplied by the injector or the electromagnetic pressure regulating valve to a fuel cell or a gas engine. Each of the injector and the electromagnetic pressure regulating valve can adjust the flow rate (or the pressure) of the fuel gas supplied to the fuel cell or the gas engine. The output of the fuel cell or the gas engine is controlled by adjusting the flow rate (or the pressure) of the fuel gas by the injector or the electromagnetic pressure regulating valve.

The injector can close and open an injection hole thereof to adjust the flow rate of the fuel gas. The injector changes the flow rate of the fuel gas by a ratio between an open time of the injection hole and a closed time of the injection hole, that is, a duty ratio. If differential pressure between upstream pressure of the injector and output pressure of the injector is high, the flow rate of the fuel gas which flows when the injection hole of the injector is opened is extremely high, and the change in the flow rate of the fuel gas with respect to the change in the duty ratio of the injector is significant. Especially, in a low flow rate region (the fuel cell or the gas engine is in a low load state), a flow gain (a value obtained by dividing the flow rate of the fuel gas by the duty ratio) is large, and the control operation is difficult. In addition, another problem is that if the upstream pressure of the injector increases, the span of duty control for changing from a low flow rate to a high flow rate becomes extremely narrow.

The electromagnetic pressure regulating valve can adjust the opening degree (opening area) of a valve passage to adjust the flow rate of the fuel gas. Therefore, if the upstream pressure of the electromagnetic pressure regulating valve increases, differential pressure between an upstream side and downstream side of the electromagnetic pressure regulating valve increases. On this account, the flow rate of the fuel gas significantly changes only by slightly increasing the opening degree, and the change in the flow rate of the fuel gas with respect to the change in the opening degree of the valve passage is significant. Therefore, as with the injector, in the electromagnetic pressure regulating valve, the pressure control of the fuel gas in the low flow rate region (low load state) is extremely difficult.

To solve such difficult problems, two regulators are provided upstream of an injector in a fuel cell system disclosed in PTL 1. These two regulators are arranged in series and reduce the pressure of a hydrogen gas in two stages, the hydrogen gas being supplied from a high-pressure tank. In the fuel cell system, the upstream pressure of the injector is maintained at certain low pressure or lower by the two regulators, so that differential pressure between an upstream side and downstream side of the injector is low. Thus, the pressure controllability is secured.

### Citation List

### Patent Literature

PTL 1: Japanese Laid-Open Patent Application Publication No. 2007-188857

### Summary of Invention

### Technical Problem

The fuel cell system described in PTL 1 includes a plurality of regulators in order to reduce the pressure of the fuel gas in multiple stages. However, if a plurality of regulators are provided, the number of components increases, and spaces for the regulators are required. Therefore, the size of the entire system increases, the cost increases, and the weight of the entire system increases. Especially, it is not preferable to install the above-described system in a vehicle in which spaces for components are limited and whose weight reduction is desired.

Moreover, by providing a plurality of regulators, the pressure loss of the system increases. Therefore, a service pressure limit of the high-pressure tank with respect to minimum working pressure of the fuel cell or the gas engine needs to be set to high pressure. In this case, the amount of fuel gas consumable in the high-pressure tank becomes smaller than that in a case where only one regulator is provided. Thus, the cruising distance of the vehicle decreases.

As above, the addition of a plurality of regulators causes various problems. Moreover, as described above, according to the conventional injector and the conventional electromagnetic pressure regulating valve, the pressure control of the fuel gas in the low load state is difficult when the upstream pressure of the conventional injector or the conventional electromagnetic pressure regulating valve is high.

Further, a diaphragm method may be used as a seal method of, for example, the electromagnetic pressure regulating valve. However, the pressure capacity of the diaphragm seal is generally small. Therefore, when handling the high-pressure fuel gas, the fuel gas may leak to the atmosphere by the failure of the diaphragm. In the case of an O ring method, the fuel gas may leak to the atmosphere by an unexpected external factor at the time of high pressure.

An object of the present invention is to provide a gas pressure regulating valve capable of, even under a high-pressure fuel gas circumstance, more precisely regulate secondary pressure of the high-pressure fuel gas to target pressure and preventing the fuel gas from leaking to the atmosphere.

### Solution to Problem

A gas pressure regulating valve of the present invention is provided at an opening portion of a tank and configured to regulate pressure of a fuel gas filled in the tank and output the fuel gas, the gas pressure regulating valve including: a housing including a valve passage connected to a primary port and a secondary port; a valve body provided in the housing and configured to move between a closed position where the valve body closes the valve passage and an open position where the valve body opens the valve passage to adjust an opening degree of the valve passage; a return spring configured to bias the valve body toward the closed position; a valve body driving unit provided in the opening portion of the tank and configured to apply a driving force corresponding to an applied voltage or an applied current to valve body against a biasing force of the return spring to cause the valve body to move toward the open position; a pressure return chamber formed in the housing and connected to the secondary port; a bearing member provided in a gap between the valve body and the housing and configured to slidingly support the valve body; first and second sealing members respectively provided on both sides of the bearing member and configured to respectively seal both sides of the gap; and a seal rod inserted in the valve body from a base end of the valve body so as to be movable relative to the valve body and configured to form a back pressure chamber connected to the primary port, the back pressure chamber being formed between the seal rod and the valve body, wherein: the first sealing member receives pressure of the pressure return chamber in a direction against the driving force and causes the valve body to move toward the closed position in accordance with the received pressure; a communication passage connected to the secondary port is formed between the seal rod and the valve body so as to be closer to a base end side of the valve body than the back pressure chamber; and a third sealing member is provided between the communication passage and the back pressure chamber so as to seal therebetween.

According to the present invention, by changing the driving force of the valve body driving unit, the opening degree of the valve passage is changed. Thus, the secondary pressure can be regulated. The secondary pressure is being introduced to the pressure return chamber, and the first sealing member receives the secondary pressure of the pressure return chamber to cause the valve body to move toward the closed position. When the secondary pressure decreases in a state where the forces, such as the secondary pressure, the driving force, and the biasing force of the return spring, acting on the valve body are balanced, the first sealing member causes the valve body to move toward the open position to increase the opening degree of the valve passage, thereby increasing the secondary pressure. With this, the state where the forces acting on the valve body are balanced is realized again. Thus, the secondary pressure is returned to certain pressure corresponding to the driving force of the valve body driving unit and is maintained at the certain pressure regardless of the change in the primary pressure. Therefore, the gas pressure regulating valve has high pressure controllability and can more precisely regulate the pressure of the high-pressure fuel gas to the target pressure.

Moreover, in the present invention, since the back pressure chamber connected to the primary port is formed, the primary pressure acting on the valve body can be canceled by the pressure of the back pressure chamber, so that the change in the secondary pressure due to the change in the primary pressure can be suppressed. With this, the pressure controllability of the fuel gas can be improved, and the gas pressure regulating valve of the present invention can control the secondary pressure more precisely than the conventional gas pressure regulating valves.

Moreover, in the present invention, the communication passage connected to the secondary port is formed between the seal rod and the valve body, and the third sealing member seals between the communication passage and the back pressure chamber. Therefore, even if the fuel gas of the back pressure chamber leaks from the back pressure chamber to the communication passage, the leaked fuel gas is introduced to the secondary side, such as the pressure return chamber. To be specific, the gas pressure regulating valve has the safety structure by which the fuel gas having leaked from the back pressure chamber is introduced to the secondary side. Thus, the fuel gas can be prevented from being discharged to the outside.

The present invention is an in tank type gas pressure regulating valve, and the pressure of the high-pressure fuel gas can be regulated to the target pressure that is low pressure only by the gas pressure regulating valve. With this, the configuration of the fuel gas supply system including the present invention can be simplified significantly, and the installation space of the fuel gas supply system can be reduced. In addition, the cost reduction can be achieved by the reduction in the number of components, and the reduction in pressure loss in the fuel gas supply system can be achieved significantly.

Further, in the present invention, by providing the bearing member, the valve body can be caused to move smoothly, and the followability with respect to the target pressure can be improved. The first and second sealing members are respectively provided on both sides of the bearing member to respectively seal both sides of the gap in which the bearing member is provided. With this, the fuel gas is prevented from flowing into the gap, and the bearing member is prevented from being exposed to the fuel gas. Thus, a material having no corrosion resistance to the fuel gas can be used as a material of the bearing member, and this increases material options. Even if the bearing member is lubricated with grease, the grease does not flow out from the gap by sealing the gap. With this, the smooth movement of the valve body is realized, and the grease can be prevented from being mixed with the fuel gas.

In the above invention, it is preferable that the valve body include a first pressure receiving surface configured to receive primary pressure at the primary port toward the open position and a second pressure receiving surface configured to receive pressure of the back pressure chamber toward the closed position, and a pressure receiving area of the first pressure receiving surface be equal to a pressure receiving area of the second pressure receiving surface.

According to the above configuration, the primary pressure received by the valve body can be canceled by the pressure of the back pressure chamber. With this, the change in the secondary pressure due to the change in the primary pressure can be eliminated, and the pressure controllability of the secondary pressure can be further improved. In addition, the driving force of the valve body driving unit can be reduced. Therefore, the gas pressure regulating valve can be reduced in size.

As another embodiment of the present invention, it is preferable that the valve body include a first pressure receiving surface configured to receive primary pressure at the primary port toward the open position and a second pressure receiving surface configured to receive pressure of the back pressure chamber toward the closed position, and a pressure receiving area of the first pressure receiving surface be smaller than a pressure receiving area of the second pressure receiving surface.

According to the above configuration, the acting force generated by the pressure of the back pressure chamber received by the valve body is larger than the acting force generated by the primary pressure received by the valve body. Therefore, the force corresponding to the primary pressure acts on the valve body in the close direction. On this account, even if the primary pressure rapidly changes and increases, the valve body does not move toward the open position, and the valve passage does not open. Therefore, when the valve body driving unit does not operate, the valve passage can be closed firmly in order to prevent the fuel gas from leaking from the primary side to the secondary side.

In the above invention, it is preferable that the first sealing member be a diaphragm seal, and the second sealing member be a low-pressure seal having low frictional resistance.

According to the above configuration, by adopting a diaphragm seal as the first sealing member, the sliding friction by the first sealing member can be eliminated. In addition, by adopting as the second sealing member a low-pressure seal having low frictional resistance, the sliding friction can be suppressed. As above, by suppressing the sliding friction acting on the valve body, the valve body can be caused to move smoothly. With this, when, for example, the primary pressure has changed or the driving force has been changed, the secondary pressure can be quickly regulated to certain pressure corresponding to the driving force. Thus, the responsiveness of the secondary pressure is improved.

In the above invention, it is preferable that the third sealing member be a high-pressure seal which has low frictional resistance and in which a difference between starting resistance and sliding resistance is small.

According to the above configuration, the valve body can be caused to move smoothly, and the responsiveness of the valve body can be improved. Moreover, since the high-pressure seal is adopted as the third sealing member, the pressure resistance to the primary pressure is improved, and the limit pressure of the primary pressure supplied through the primary port can be improved.

In the above invention, it is preferable that the gas pressure regulating valve be a normally closed valve configured such that when the applied voltage or the applied current applied to the valve body driving unit is zero, the valve body is located at the closed position by the return spring.

According to the above configuration, the valve passage can be urgently shut off by shutting off the supply of the applied voltage or the applied current applied to the valve body driving unit.

### Advantageous Effects of Invention

The present invention can provide a gas pressure regulating valve capable of, even under a high-pressure fuel gas circumstance, more precisely regulating secondary pressure of the high-pressure fuel gas to target pressure and preventing a fuel gas from leaking to the atmosphere.

### Brief Description of Drawings

[Fig. 1] Fig. 1 is a circuit diagram showing the configuration of a fuel gas supply system including an electromagnetic pressure regulating valve according to Embodiment 1.
[Fig. 2] Fig. 2 is a cross-sectional view showing the configuration of the electromagnetic pressure regulating valve of Embodiment 1.
[Fig. 3] Fig. 3 is a cross-sectional view showing the configuration of the electromagnetic pressure regulating valve of Embodiment 2.
[Fig. 4] Fig. 4 is a cross-sectional view showing the configuration of the electromagnetic pressure regulating valve of Embodiment 3.
[Fig. 5] Fig. 5 is a cross-sectional view showing the configuration of the electromagnetic pressure regulating valve of Embodiment 4.
[Fig. 6] Fig. 6 is a cross-sectional view partially showing the configuration of a pressure regulating valve of Embodiment 5.
[Fig. 7] Fig. 7 is a cross-sectional view partially showing the configuration of the electromagnetic pressure regulating valve of Embodiment 6.

### Description of Embodiments

Hereinafter, pressure regulating valves 1 and 1A to 1E according to Embodiments 1 to 6 of the present invention and a fuel gas supply systems 2 including the pressure regulating valve will be explained in reference to the drawings. In the embodiments, the concept of directions, such as upper, lower, left, right, front, and rear directions, is used for convenience of explanation and does not indicate that the configurations, arrangements, directions, and the like of the pressure regulating valves 1 and 1A to 1E and the fuel gas supply system 2 are limited to the directions. In addition, each of the pressure regulating valves 1 and 1A to 1E and the fuel gas supply system 2 is just one embodiment of the present invention, and the present invention is not limited to the embodiments. Additions, eliminations, and modifications may be made within the scope of the present invention.

### Fuel Gas Supply System

The fuel gas supply system 2 is connected to a high-pressure tank 3 configured to store a fuel gas, such as a hydrogen gas or a compressed natural gas, at high pressure. The fuel gas supply system 2 is connected to a fuel gas consuming device, such as a fuel cell or a gas engine, and regulates the pressure of the high-pressure fuel gas to desired low pressure to supply the fuel gas to the fuel gas consuming device. The fuel gas supply system 2 configured as above includes an electromagnetic pressure regulating valve 1, a pressure sensor 4, and a calculation controller 5.

The electromagnetic pressure regulating valve 1 is an in tank type container master valve and is provided at an opening portion of the high-pressure tank 3. The electromagnetic pressure regulating valve 1 regulates the pressure of the high-pressure fuel gas. The electromagnetic pressure regulating valve 1 is connected to the fuel gas consuming device through a supply passage 2a, and the pressure sensor 4 is provided on the supply passage 2a so as to be located downstream of the electromagnetic pressure regulating valve 1. The pressure sensor 4 detects the pressure of the fuel gas flowing through the supply passage 2a. The pressure sensor 4 is connected to the calculation controller 5 through a signal wire 7, and a detected pressure signal corresponding to the detected pressure is input to the calculation controller 5. A target pressure command signal corresponding to target pressure is input to the calculation controller 5 from an input unit, a control device, or the like, not shown. The calculation controller 5 calculates a difference between the target pressure command signal and the detected pressure signal and supplies to the electromagnetic pressure regulating valve 1 a current having a magnitude corresponding to this difference. The electromagnetic pressure regulating valve 1 regulates the pressure of the high-pressure fuel gas to certain pressure corresponding to the supplied current.

An electromagnetic shutoff valve, not shown, may be added to the container master valve constituted by the electromagnetic pressure regulating valve 1. The electromagnetic shutoff valve is a so-called electromagnetic on-off valve and is provided on the supply passage 2a so as to be located upstream of the electromagnetic pressure regulating valve 1. The electromagnetic shutoff valve opens or closes the supply passage 2a in accordance with a signal transmitted thereto and is used when urgently shutting off communication between the high-pressure tank 3 and the fuel gas consuming device.

There are various embodiments of the electromagnetic pressure regulating valve 1 of the fuel gas supply system 2 configured as above. Hereinafter, the configuration of the electromagnetic pressure regulating valve 1 will be described in detail. The electromagnetic pressure regulating valve 1 of Embodiment 1 is just one example of the electromagnetic pressure regulating valve provided in the fuel gas supply system 2. After the explanation of the electromagnetic pressure regulating valve 1 of Embodiment 1, some typical embodiments will also be described in detail.

### Embodiment 1

### Configuration of Electromagnetic Pressure Regulating Valve

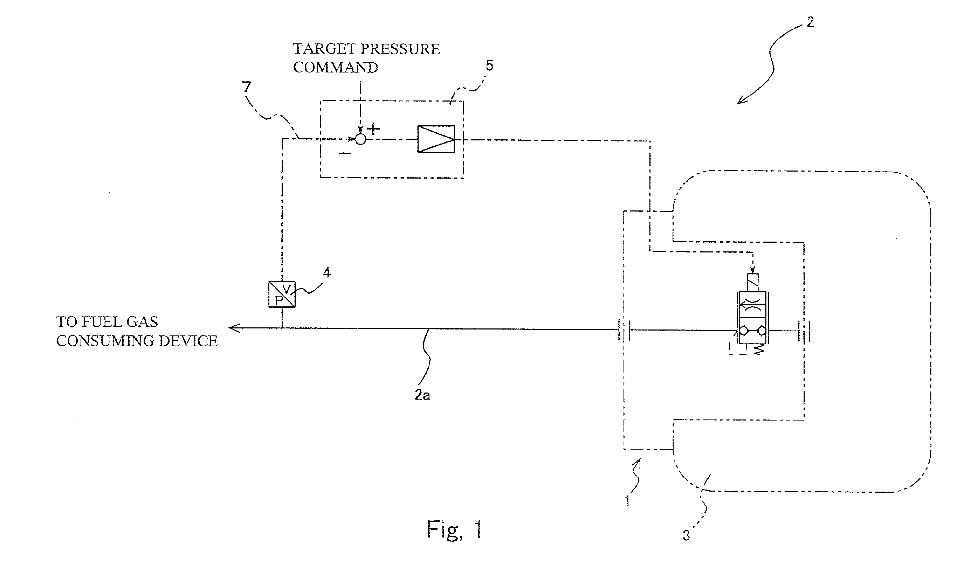

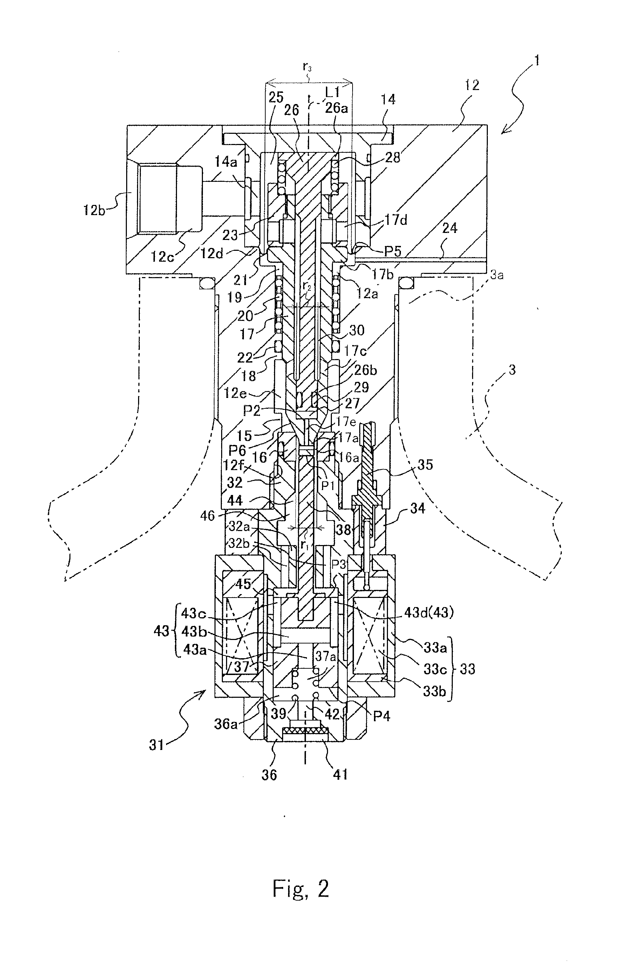

The electromagnetic pressure regulating valve 1 of Embodiment 1 shown in Fig. 2 includes a housing 12. The housing 12 has a substantially cylindrical shape. A lower end side of the housing 12 is inserted in an opening portion 3a of the high-pressure tank 3 to be attached to the opening portion 3a in a sealed state. The housing 12 includes a valve body hole 12a and a secondary port 12b. The valve body hole 12a extends along an axis line L1 extending in the upper-lower direction and has a circular cross section. The valve body hole 12a penetrates the housing 12 in the upper-lower direction and includes openings at both upper and lower sides. The secondary port 12b is formed at an upper end side of a side surface of the housing 12 and exposed to the outside of the high-pressure tank 3. The housing 12 includes a secondary passage 12c perpendicular to the axis line L1, and the secondary port 12b is connected to the valve body hole 12a through the secondary passage 12c. The secondary port 12b is also connected to the fuel gas consuming device (see Fig. 1) through the supply passage 2a (see Fig. 1).

The housing 12 includes a valve cap member 14 at an upper opening portion of the valve body hole 12a. The valve cap member 14 is formed to have a substantially bottomed cylindrical shape and fittingly inserted in the upper opening portion of the valve body hole 12a in a sealed state such that an opening of the valve cap member 14 faces downward. A below-described electromagnetic proportional solenoid 31 is threadedly engaged with a lower opening portion of the valve body hole 12a. The housing 12 includes a seat attaching portion 15 and a seat member 16 above the electromagnetic proportional solenoid 31. The seat attaching portion 15 is formed on an inner surface of the housing 12 to extend along the entire periphery in the circumferential direction and projects in a radially inward direction. The seat member 16 is provided in the valve body hole 12a to be located under and contact the seat attaching portion 15.

The seat member 16 has a substantially cylindrical shape and includes a valve hole 16a formed along an axis (which substantially coincides with the axis line L1) of the seat member 16. The seat member 16 is fittingly inserted in the valve body hole 12a in a sealed state and sandwiched between the seat attaching portion 15 and the electromagnetic proportional solenoid 31. A top end portion 17a of a valve body 17 is seated (pressed) on the seat member 16 provided in the valve body hole 12a as above.

The valve body 17 is formed to have a substantially bottomed cylindrical shape, and an outer periphery of the top end portion 17a at the lower side has a tapered shape. The valve body 17 is inserted in the valve body hole 12a along the axis line L1. When the valve body 17 is located at a closed position shown in Fig. 2, the top end portion 17a is seated on the seat member 16 to close the valve hole 16a such that a part of the top end portion 17a is inserted in the valve hole 16a. The valve body 17 includes a flange 17b on an outer periphery of a base end side (upper side) thereof.

The flange 17b is formed on the outer periphery of the valve body 17 along the entire periphery in the circumferential direction and projects in a radially outward direction. The flange 17b is located on the upper opening portion side of the valve body hole 12a. The housing 12 includes a seal attaching portion 18 at a position on an inner surface thereof, the position being below the flange 17b and opposed to the flange 17b. The seal attaching portion 18 is formed on the inner surface of the housing 12 along the entire periphery in the circumferential direction and projects in the radially inward direction. The seal attaching portion 18 and the flange 17b are spaced apart from each other in the upper-lower direction, and a bearing member accommodating space 19 having a substantially annular shape is formed between the seal attaching portion 18 and the flange 17b. A bearing member 20 is accommodated in the bearing member accommodating space 19.

The bearing member 20 is formed to have a substantially cylindrical shape. The bearing member 20 is externally attached to the valve body 17 to be interposed between the valve body 17 and the housing 12. The bearing member 20 is constituted by a ball guide, a ball bearing, a slide bearing, or the like. The bearing member 20 supports the valve body 17 such that the valve body 17 can move relative to the housing 12 in the upper-lower direction along the axis line L1. The bearing member 20 is lubricated with grease in order to smoothen the movement of the valve body 17 and improve the durability of the bearing member 20. A diaphragm seal 21 and a low-pressure sealing member 22 are respectively provided on both upper and lower sides of the bearing member 20.

The diaphragm seal 21 that is a first sealing member is a so-called diaphragm and has a substantially annular shape. An outer edge portion of the diaphragm seal 21 is attached to the housing 12, and an inner edge portion thereof is attached to the flange 17b of the valve body 17. More specifically, the housing 12 includes a step portion 12d on the upper opening portion side of the valve body hole 12a of the inner surface thereof. The step portion 12d is formed on the inner surface of the housing 12 along the entire periphery in the circumferential direction and is configured in a step shape so as to spread in the radially outward direction. An opening end portion of the valve cap member 14 is in contact with the step portion 12d. The diaphragm seal 21 is attached to the housing 12 such that the valve cap member 14 and the step portion 12d sandwich the outer edge portion of the diaphragm seal 21. An attaching member 23 having a substantially cylindrical shape is threadedly engaged with the outer periphery of the base end portion of the valve body 17, that is, an upper side of the flange 17b. A lower end of the attaching member 23 is in contact with an upper surface of the flange 17b. The diaphragm seal 21 is attached to the valve body 17 such that the flange 17b and the attaching member 23 sandwiches the inner edge portion of the diaphragm seal 21.

The diaphragm seal 21 attached as above is provided between the housing 12 and the valve body 17 to seal between the inside of the valve cap member 14 and the bearing member accommodating space 19. Thus, a pressure return chamber 25 is formed in the valve cap member 14. The valve cap member 14 includes a through passage 14a penetrating the valve cap member 14 in the radial direction so as to connect the inside and outside of the valve cap member 14. The pressure return chamber 25 and the secondary passage 12c are connected to each other through the through passage 14a.

The low-pressure sealing member 22 that is a second sealing member is an O ring having a substantially annular shape. The low-pressure sealing member 22 is subjected to a surface treatment using resin or the like in order to reduce frictional resistance. The low-pressure sealing member 22 is attached to the seal attaching portion 18 and seals between the housing 12 and the valve body 17. A valve space 12e sandwiched between the seal attaching portion 18 and the seat member 16 is formed in the valve body hole 12a so as to be located on a lower side of the seal attaching portion 18. The low-pressure sealing member 22 seals between the valve space 12e and the bearing member accommodating space 19.

As above, the diaphragm seal 21 and the low-pressure sealing member 22 respectively seal the upper side and lower side of the bearing member accommodating space 19. Thus, the bearing member accommodating space 19 is separated from the other spaces formed in the housing 12. The housing 12 includes an atmosphere communication passage 24 connected to the bearing member accommodating space 19. The bearing member accommodating space 19 is open to the atmosphere through the atmosphere communication passage 24.

With this, the fuel gas does not flow into the bearing member accommodating space 19, and the bearing member 20 is not exposed to the fuel gas. Therefore, a material having no corrosion resistance to the fuel gas can be used as a material of the bearing member 20, and this increases material options. In addition, the grease of the bearing member 20 is not exposed to the fuel gas and does not leak to the other spaces, such as the secondary passage 12c or the valve space 12e, in the housing 12. Therefore, the grease in the bearing member accommodating space 19 can be prevented from drying up, and a good lubrication state of the bearing member 20 can be maintained. With this, the durability of the bearing member 20 can be improved, and the valve body 17 can be moved smoothly. In addition, the grease can be prevented from leaking and being mixed with the fuel gas.

A seal rod 26 is inserted in the valve body 17, provided in the housing 12 as above, from the base end portion (to be specific, an upper end portion) of the valve body 17. The seal rod 26 is formed to have a substantially columnar shape. A back pressure chamber 27 is formed in the valve body 17 so as to be sandwiched between a bottom surface of the valve body 17 and a tip end of the seal rod 26. The top end portion 17a of the valve body 17 includes a valve communication passage 17e. The back pressure chamber 27 is connected to the valve hole 16a through the valve communication passage 17e.

A base end portion of the seal rod 26 is in contact with and supported by a ceiling surface of the valve cap member 14 and includes a spring receiving portion 26a. The spring receiving portion 26a is formed on an outer periphery of the base end portion of the seal rod 26 to extend along the entire periphery in the circumferential direction and projects in the radially outward direction. The spring receiving portion 26a is opposed to the attaching member 23 of the valve body 17, and a return spring 28 is attached between the spring receiving portion 26a and the attaching member 23 in a compressed state. The return spring 28 is a compression coil spring and is externally attached to the base end side of the seal rod 26. The return spring 28 biases the valve body 17 toward the closed position (to be specific, in a closed position direction).

An intermediate portion of the seal rod 26 is smaller in diameter than each of a tip end side and base end side of the seal rod 26. A communication passage 30 having an annular shape is formed between an outer peripheral surface of the seal rod 26 and an inner surface of the valve body 17. Each of the diameters of the tip end side and base end side of the seal rod 26 is substantially the same as an inner diameter of the valve body 17. The communication passage 30 is located above the back pressure chamber 27. Both upper and lower sides of the communication passage 30 are respectively closed by the tip end side and base end side of the seal rod 26. The valve body 17 includes a tip end side passage 17c at the tip end side thereof and a base end side passage 17d at the base end side thereof. The communication passage 30 is connected to the valve space 12e through the tip end side passage 17c and connected to the pressure return chamber 25 through the base end side passage 17d.

Further, a seal groove 26b is formed on the outer periphery of the tip end side of the seal rod 26 to extend along the entire periphery in the circumferential direction. A high-pressure sealing member 29 having an annular shape is fitted in the seal groove 26b. The high-pressure sealing member 29 that is a third sealing member is a high-pressure seal which has low frictional resistance and in which a difference between starting resistance and sliding resistance is small. For example, the high-pressure sealing member 29 is an O ring subjected to a surface treatment by, for example, fluorocarbon resin. The high-pressure sealing member 29 seals between the valve body 17 and the seal rod 26.

When the valve body 17 is pushed in a direction against the biasing force of the return spring 28, that is, toward the open position (in an open position direction), the valve body 17 is separated from the seat member 16 to open the valve hole 16a. The electromagnetic proportional solenoid 31 is provided at the housing 12 in order to push the valve body 17 in the open position direction.

The electromagnetic proportional solenoid 31 that is a valve body driving unit is threadedly engaged with an opening end portion 12f of the lower end side of the housing 12 and provided in the high-pressure tank 3. The electromagnetic proportional solenoid 31 includes a coupling member 32, and the coupling member 32 has a substantially tubular shape. An upper end portion of the coupling member 32 is threadedly engaged with the opening end portion 12f of the lower end side of the housing 12. The upper end portion of the coupling member 32 and the seat attaching portion 15 sandwiches the seat member 16. The coupling member 32 extends in the lower direction along the axis line L1 and is provided such that the inside thereof is connected to the valve hole 16a of the seat member 16. A solenoid coil 33 is externally attached to a lower end portion of the coupling member 32.

The solenoid coil 33 is formed to have a substantially cylindrical shape and extends in the lower direction along the axis line L1. The solenoid coil 33 includes a case 33a having a substantially cylindrical shape, and a bobbin 33b and a coil wire 33c are provided in the case 33a. The bobbin 33b is formed to also have a substantially cylindrical shape. The coil wire 33c winds around an outer periphery of the bobbin 33b. The solenoid coil 33 configured as above is located so as to be spaced apart from the opening end portion 12f of the lower end side of the housing 12 in the lower direction. A spacer 34 is interposed between the solenoid coil 33 and the opening end portion 12f of the lower end side of the housing 12.

The spacer 34 is formed to have a substantially cylindrical shape and externally attached to the coupling member 32. A conductive wire member 35 is provided in the spacer 34 and the housing 12 so as to be inserted through the spacer 34 and the housing 12. The conductive wire member 35 is connected to the calculation controller 5 (see Fig. 1) and the coil wire 33c, and a current can flow from the calculation controller 5 to the coil wire 33c. By supplying a current to the coil wire 33c, the solenoid coil 33 is magnetized. An opening end portion of the lower side of the solenoid coil 33 configured as above is closed by a solenoid cap member 36 fittingly inserted in the opening end portion of the lower side of the solenoid coil 33.

The solenoid cap member 36 has a substantially bottomed tubular shape. The solenoid cap member 36 is provided in the solenoid coil 33 such that an opening thereof faces the upper side (to be specific, the coupling member 32 side). A movable core 37 is slidably inserted in the solenoid cap member 36. The movable core 37 is formed to have a substantially columnar shape, and an upper end thereof is opposed to the lower end of the coupling member 32. With this, when a current is supplied to the coil wire 33c, that is, to the solenoid coil 33, a magnetizing force (driving force) acts on the movable core 37, and the movable core 37 is attracted toward the coupling member 32.

A push rod 38 is provided at the movable core 37. The push rod 38 is formed to have a substantially columnar shape. A base end portion (lower end portion) of the push rod 38 is threadedly engaged with an upper end portion of the movable core 37. The push rod 38 extends in the upper direction along the axis line L1 and is inserted through the coupling member 32. A top end portion of the push rod 38 is formed to have a partially spherical shape. The top end portion of the push rod 38 reaches the valve hole 16a of the seat member 16 and is in contact with the top end portion 17a of the valve body 17. Therefore, when the movable core 37 is attracted toward the coupling member 32, the valve body 17 is pushed by the push rod 38 in the open position direction against the biasing force of the return spring 28 to open the valve hole 16a. Here, the open position is a position of the valve body 17 when the movable core 37 has been attracted toward the coupling member 32.

Further, the movable core 37 includes a spring receiving seat 37a at a lower end side thereof. The spring receiving seat 37a is a recess formed along an axis (which substantially coincides with the axis line L1) of the movable core 37, and a compression coil spring 39 is inserted in the spring receiving seat 37a. The compression coil spring 39 is attached between the movable core 37 and the solenoid cap member 36 in a compressed state. The compression coil spring 39 biases the movable core 37 toward the valve body 17 to cause the top end portion of the push rod 38 to be pressed against the top end portion 17a of the valve body 17.

In the electromagnetic proportional solenoid 31 configured as above, a primary port 41 is formed on a lower surface of the solenoid cap member 36. The primary port 41 is formed around the axis line L1 and opens in the high-pressure tank 3. The solenoid cap member 36 includes a primary passage 42 extending along the axis line L1, and the primary port 41 is connected to the inside of the solenoid cap member 36 through the primary passage 42.

A primary space 36a sandwiched between a bottom surface of the solenoid cap member 36 and a lower surface of the movable core 37 is formed in the solenoid cap member 36, and the primary space 36a is connected to the primary port 41 through the primary passage 42. The movable core 37 includes a solenoid communication passage 43. The solenoid communication passage 43 includes a communication portion 43a, a penetrating portion 43b, and outer peripheral passages 43c and 43d. The communication portion 43a includes an opening facing the spring receiving seat 37a of the movable core 37 and extends therefrom in the upper direction along the axis line L1. The penetrating portion 43b is connected to an upper side of the communication portion 43a and extends therefrom in both directions along the radial direction. The penetrating portion 43b penetrates the movable core 37 in a straight line, and both openings thereof are respectively connected to the outer peripheral passages 43c and 43d. Each of the outer peripheral passages 43c and 43d is a groove formed on an outer periphery of the movable core 37 and extending in the upper direction from the opening of the penetrating portion 43b. The outer peripheral passages 43c and 43d reach the upper end of the movable core 37.

An inward flange 32a is formed on an inner surface of the lower end side of the coupling member 32. The inward flange 32a is formed on the inner surface of the lower end side of the coupling member 32 along the entire periphery in the circumferential direction and projects in the radially inward direction. The inner diameter of the inward flange 32a is slightly larger than the outer diameter of the push rod 38, and the push rod 38 is inserted through the inward flange 32a. With this, the inside of the coupling member 32 is divided by the inward flange 32a into the upper side and the lower side. Thus, a communication chamber 44 is formed on an upper side of the inward flange 32a, and a connection chamber 45 sandwiched between the inward flange 32a and an upper end of the movable core 37 is formed on a lower side of the inward flange 32a. The communication chamber 44 and the connection chamber 45 are connected to the valve hole 16a and the outer peripheral passages 43c and 43d. The communication chamber 44 and the connection chamber 45 are connected to each other through a plurality of through passages 32b formed in the inward flange 32a. The through passages 32b extend in parallel with the axis line L1 so as to penetrate the inward flange 32a and are arranged at regular intervals about the axis line L1.

The primary port 41 is connected to the valve hole 16a through the primary passage 42, the solenoid communication passage 43, the connection chamber 45, the through passages 32b, and the communication chamber 44. Moreover, the valve hole 16a is connected to the secondary port 12b through the valve space 12e, the tip end side passage 17c, the communication passage 30, the base end side passage 17d, the pressure return chamber 25, the through passage 14a, and the secondary passage 12c. The primary passage 42, the solenoid communication passage 43, the communication chamber 44, the through passages 32b, the connection chamber 45, the valve hole 16a, the valve space 12e, the tip end side passage 17c, the communication passage 30, the base end side passage 17d, the pressure return chamber 25, the through passage 14a, and the secondary passage 12c constitute a valve passage 46. The primary port 41 and the secondary port 12b are connected to each other through the valve passage 46. The primary port 41 and the secondary port 12b connected as above are arranged such that the secondary port 12b is provided at right angle to the primary port 41. Thus, the electromagnetic pressure regulating valve 1 is an angle type pressure regulating valve. The electromagnetic pressure regulating valve 1 may be a straight type (that is, in-line type) pressure regulating valve. In this case, the secondary port 12b is formed along the axis line L1.

In the electromagnetic pressure regulating valve 1 configured as above, the fuel gas stored in the high-pressure tank 3 is supplied to the primary port 41 to be introduced to the valve hole 16a through the primary passage 42, the solenoid communication passage 43, the connection chamber 45, the through passages 32b, and the communication chamber 44. Then, when the valve body 17 is separated from the seat member 16 to open the valve hole 16a, that is, the valve passage 46, the fuel gas flows from the valve hole 16a to the valve space 12e to be discharged from the secondary port 12b through the tip end side passage 17c, the communication passage 30, the base end side passage 17d, the pressure return chamber 25, the through passage 14a, and the secondary passage 12c.

When opening the valve passage 46, an annular orifice is formed between the valve body 17 and the seat member 16. The pressure of the fuel gas on a primary side that is the primary port 41 side of the orifice is reduced by the orifice, and the fuel gas is caused to flow to a secondary side that is the secondary port 12b side of the valve hole 16a. To be specific, primary pressure p₁ of the fuel gas is reduced to secondary pressure p₂ by the orifice. The fuel gas whose pressure has been reduced to the secondary pressure p₂ is introduced to the pressure return chamber 25 through the communication passage 30 and the like as described above. The diaphragm seal 21 receives the secondary pressure p₂ having been introduced to the pressure return chamber 25 and causes the valve body 17 to move in the closed direction by a force corresponding to the secondary pressure p₂.

The primary pressure p₁ is introduced to the back pressure chamber 27 through the valve communication passage 17e. The fuel gas of the primary pressure p₁ having been introduced to the back pressure chamber 27 is prevented by the high-pressure sealing member 29 from leaking from the back pressure chamber 27 to the communication passage 30. However, if the difference between the primary pressure p₁ and the secondary pressure p₂ is large, the fuel gas may leak from the back pressure chamber 27 to the communication passage 30. Here, the communication passage 30 is connected to the secondary side, such as the pressure return chamber 25 and the secondary port 12b. Therefore, even if the fuel gas leaks from the back pressure chamber 27 to the communication passage 30, the leaked fuel gas flows to the secondary port 12b. Thus, the electromagnetic pressure regulating valve 1 is configured as a valve having a safety structure by which the fuel gas having leaked from the primary side can be returned to the secondary side without causing the leakage to the outside. Therefore, the fuel gas is not discharged to the outside of the electromagnetic pressure regulating valve 1. To be specific, the fuel gas does not leak to the atmosphere.

In the electromagnetic pressure regulating valve 1 configured as above, a pressure receiving surface P1 of the top end portion 17a of the valve body 17 receives the primary pressure p₁ of the valve hole 16a in the upper direction (to be specific, the open position direction), and a pressure receiving surface P2 in the valve body 17 receives the primary pressure p₁, having been introduced to the back pressure chamber 27, in the lower direction (to be specific, the closed position direction). Therefore, the acting force received by the pressure receiving surface P1 and the acting force received by the pressure receiving surface P2 cancel each other. A pressure receiving area A1 of the pressure receiving surface P1 is determined in accordance with an inner diameter r₁ of the seat member 16, that is, a seat diameter r₁, and a pressure receiving area A2 of the pressure receiving surface P2 is determined in accordance with an inner diameter r₂ of the valve body 17, that is, a hole diameter r₂ of the back pressure chamber 27. In the present embodiment, the seat member 16 and the valve body 17 are formed such that the seat diameter r₁ and the hole diameter r₂ become equal to each other. Therefore, in the electromagnetic pressure regulating valve 1 of the present embodiment, the acting force received by the pressure receiving surface P1 and the acting force received by the pressure receiving surface P2 become substantially equal to each other and cancel each other.

The connection chamber 45 and the primary space 36a are respectively formed on the upper side and lower side of the movable core 37. The primary pressure p₁ is introduced to the chambers 45 and 36a, and the upper end (pressure receiving surface P3) and lower end (pressure receiving surface P4) of the movable core 37 receive the primary pressure p₁ in the upper-lower direction. The movable core 37 is formed to have a substantially columnar shape. The pressure receiving areas of the pressure receiving surfaces P3 and P4 are substantially equal to each other, so that the acting force received by the pressure receiving surface P3 and the acting force received by the pressure receiving surface P4 cancel each other.

Further, the base end side of the valve body 17 is larger in diameter than the tip end side thereof. In addition, a pressure receiving area A5 of the diaphragm seal 21 is larger than each of the pressure receiving areas A1 and A2. To be specific, the pressure receiving area of a pressure receiving surface P5 located at the base end side of the valve body 17 and configured to receive the secondary pressure p₂ in the closed position direction is larger than the pressure receiving area of a pressure receiving surface P6 located at the tip end side of the valve body 17 and configured to receive the secondary pressure p₂ in the open position direction. Therefore, the valve body 17 is pushed in the closed position direction by the secondary pressure p₂ and the return spring 28. When a current is not flowing through the solenoid coil 33, the valve body 17 is located at the closed position. To be specific, the electromagnetic pressure regulating valve 1 is configured as a normally closed valve. Therefore, the valve passage 46 can be urgently shut off by shutting off the current flowing through the solenoid coil 33.

### Operations of Electromagnetic Pressure Regulating Valve

Hereinafter, operations of the electromagnetic pressure regulating valve 1 will be explained in reference to Fig. 2. When a current is supplied to the solenoid coil 33 of the electromagnetic proportional solenoid 31, the magnetizing force acts on the movable core 37, and the movable core 37 is attracted toward the coupling member 32. With this, the valve body 17 is separated from the seat member 16 to move in the open position direction. Thus, the valve passage 46 opens. By opening the valve passage 46, the orifice (not shown) is formed between the valve body 17 and the seat member 16. Then, the pressure of the fuel gas is reduced to the secondary pressure p₂ by the orifice, and the fuel gas flows to the valve space 12e.

The fuel gas in the valve space 12e is introduced to the pressure return chamber 25 through the tip end side passage 17c, the communication passage 30, and the base end side passage 17d and further flows through the through passage 14a and the secondary passage 12c to be discharged from the secondary port 12b. The valve body 17 and the diaphragm seal 21 receives the secondary pressure p₂ of the fuel gas having been introduced to the pressure return chamber 25, and the valve body 17 moves in the closed position direction or the open position direction up to a position where the magnetizing force received by the movable core 37, the acting force generated by the secondary pressure p₂ received by the pressure receiving surface P5, and the spring force of the return spring 28 are balanced. To be specific, in order to balance the above forces, the valve body 17 adjusts the opening degree of the valve passage 46 (to be specific, the opening degree of the orifice). Thus, the secondary pressure p₂ of the fuel gas flowing to the valve space 12e is adjusted. With this, the secondary pressure p₂ becomes pressure (to be specific, target pressure) corresponding to the current flowing through the solenoid coil 33.

For example, when the secondary pressure p₂ is lower than the target pressure, the magnetizing force becomes larger than the acting force generated by the secondary pressure p₂, and the valve body 17 moves in a direction away from the seat member 16 (to be specific, the open position direction). Then, the opening degree of the valve passage 46 increases, and the secondary pressure p₂ increases. With this, the valve body 17 moves up to a position (the opening degree) where the magnetizing force, the acting force generated by the secondary pressure p₂, and the spring force of the return spring 28 are balanced. Thus, the secondary pressure p₂ is regulated to the target pressure. Therefore, even if the primary pressure p₁ changes, the electromagnetic pressure regulating valve 1 can control the opening degree of the valve passage 46 in accordance with the change in the primary pressure p₁ to regulate the secondary pressure p₂ to the target pressure. On this account, even if the primary pressure p₁ is not reduced to certain pressure in advance, the pressure of the high-pressure fuel gas can be reduced and regulated to predetermined low pressure, that is, the target pressure only by the electromagnetic pressure regulating valve 1. Therefore, the electromagnetic pressure regulating valve 1 is high in pressure controllability.

In the electromagnetic pressure regulating valve 1, by introducing the primary pressure p₁ to the back pressure chamber 27, the acting force generated by the primary pressure p₁ received by the pressure receiving surface P1 and the acting force generated by the primary pressure p₁ received by the pressure receiving surface P2 cancel each other. With this, the change in the secondary pressure p₂ due to the change in the primary pressure p₁ can be suppressed. Therefore, the pressure controllability with respect to the high-pressure fuel gas can be improved, and the electromagnetic pressure regulating valve 1 can control the secondary pressure p₂ more precisely than the conventional electromagnetic pressure regulating valves. By canceling the acting forces generated by the primary pressure p₁, the magnetizing force of the electromagnetic proportional solenoid 31 can be reduced, and the electromagnetic pressure regulating valve 1 can be reduced in size.

By adopting the diaphragm seal 21, the sliding friction generated when the valve body 17 moves can be eliminated. In addition, by adopting the low-pressure sealing member 22 which is low in the frictional resistance, the sliding friction can be suppressed as much as possible. The valve body 17 can be caused to move smoothly by suppressing the sliding friction acting on the valve body 17 as above. With this, the secondary pressure p₂ can be quickly regulated to the target pressure. Thus, the responsiveness of the secondary pressure p₂ is improved. Further, by adopting the high-pressure sealing member 29, the pressure resistance of the electromagnetic pressure regulating valve 1 with respect to the primary pressure p₁ is improved, and the limit pressure of the primary pressure p₁ supplied through the primary port 41 can be improved.

The electromagnetic pressure regulating valve 1 is an in tank type pressure regulating valve in which the electromagnetic proportional solenoid 31 is provided in the high-pressure tank 3, and the pressure of the high-pressure fuel gas can be regulated to the target pressure only by the electromagnetic pressure regulating valve 1. With this, the configuration of the fuel gas supply system 2 can be simplified significantly, and the installation space of the fuel gas supply system 2 can be reduced. In addition, the cost reduction can be achieved by the reduction in the number of components, and the reduction in pressure loss between the high-pressure tank 3 and the fuel gas consuming device can be achieved significantly.

Further, the electromagnetic pressure regulating valve 1 is an in tank type container master valve and has two functions that are electromagnetic shutoff and electromagnetic pressure regulation. Therefore, the electromagnetic shutoff valve is unnecessary at an upstream side of the electromagnetic pressure regulating valve 1, and since the configuration as the container master valve is simplified, significant reductions in the pressure loss and the cost can be achieved. Moreover, since current-carrying portions, such as the electromagnetic proportional solenoid 31, are provided in the opening portion 3a of the high-pressure tank 3, that is, provided in the fuel gas, the electromagnetic pressure regulating valve 1 is configured as a container master valve having an explosion-proof structure.

### Embodiment 2

The electromagnetic pressure regulating valve 1A according to Embodiment 2 of the present invention is similar in configuration to the electromagnetic pressure regulating valve 1 according to Embodiment 1. Therefore, only components of the electromagnetic pressure regulating valve 1A according to Embodiment 2 different from components of the electromagnetic pressure regulating valve 1 according to Embodiment 1 will be explained. The same reference signs are used for the same components, and explanations thereof are omitted.

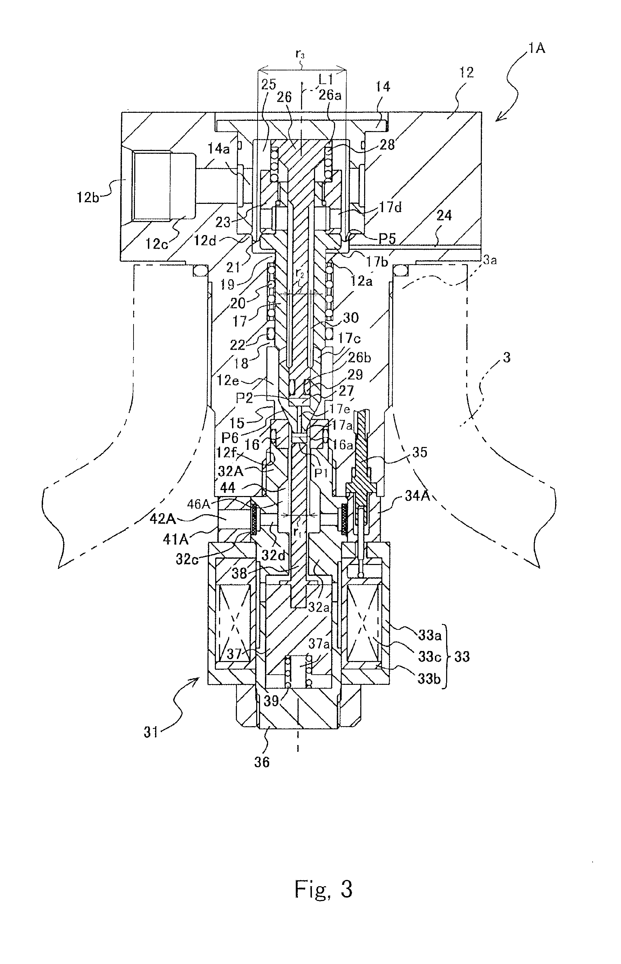

As shown in Fig. 3, in the electromagnetic pressure regulating valve 1A according to Embodiment 2 of the present invention, a spacer 34A includes a primary port 41A and a primary passage 42A. An outer peripheral groove 32c is formed on an outer peripheral portion of a coupling member 32A, and the spacer 34A is externally attached to the outer peripheral portion of the coupling member 32A. The outer peripheral groove 32c is formed on the outer peripheral portion of the coupling member 32A along the entire periphery in the circumferential direction. The primary passage 42A is formed to connect the outer peripheral groove 32c and the primary port 41A. The coupling member 32A includes a plurality of spacer communication passages 32d extending in the radial direction, and the outer peripheral groove 32c communicates with the communication chamber 44 through a plurality of spacer communication passages 32d.

In the electromagnetic pressure regulating valve 1A configured as above, a primary side of a valve passage 46A is constituted by the primary port 41A, the primary passage 42A, the outer peripheral groove 32c, the spacer communication passages 32d, and the connection chamber 45. A secondary side of the valve passage 46A is the same in configuration as the secondary side of the valve passage 46 according to Embodiment 1.

The electromagnetic pressure regulating valve 1A according to Embodiment 2 has the same operational advantages as the electromagnetic pressure regulating valve 1 according to Embodiment 1.

### Embodiments 3 and 4

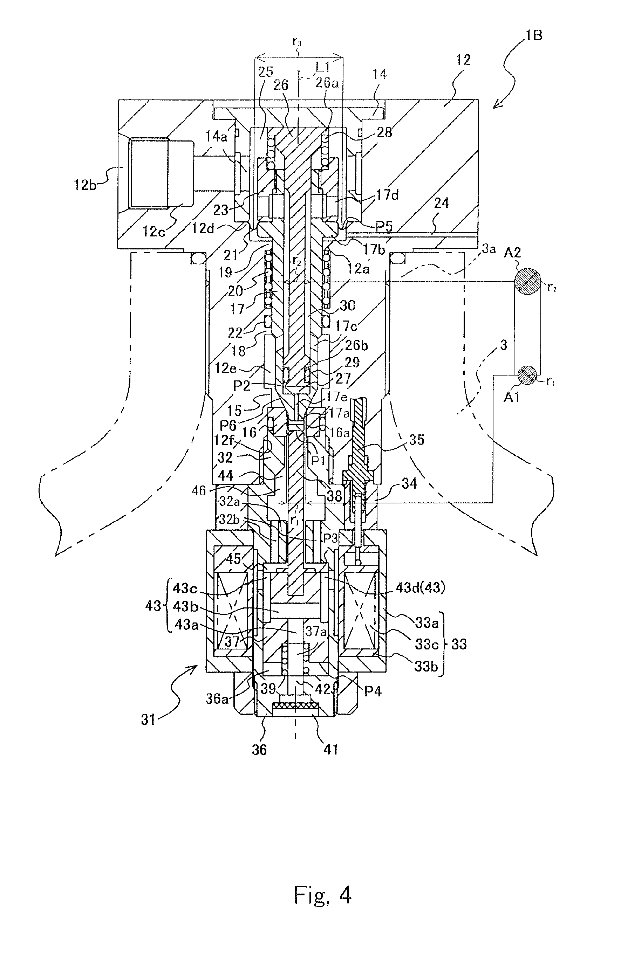

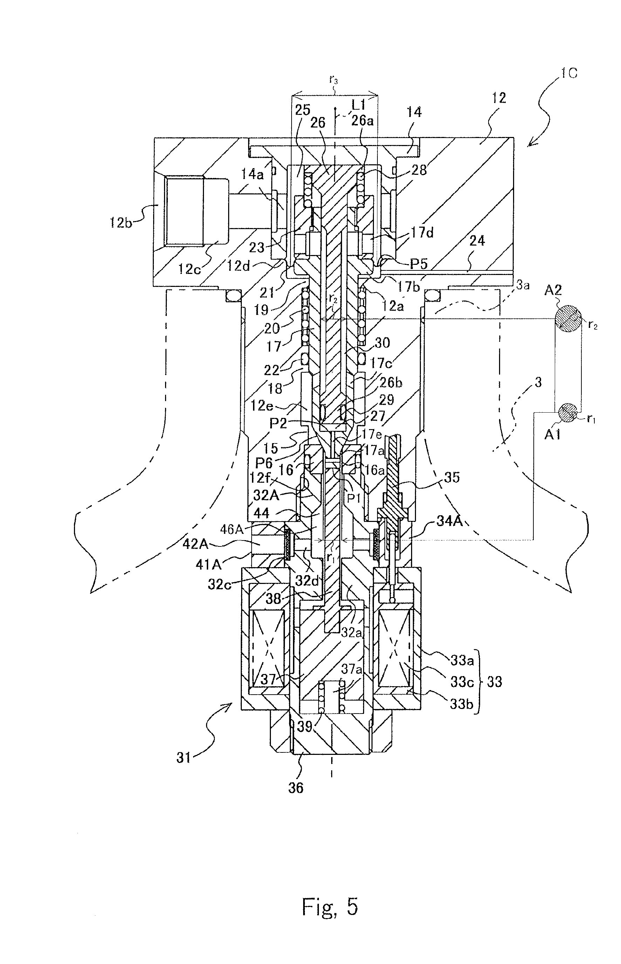

As shown in Figs. 4 and 5, the electromagnetic pressure regulating valves 1B and 1C according to Embodiments 3 and 4 of the present invention are respectively the same as the electromagnetic pressure regulating valves I and 1A according to Embodiments 1 and 2 except for the pressure receiving areas A1 and A2. Hereinafter, only the pressure receiving areas A1 and A2 will be explained.

In the electromagnetic pressure regulating valves 1B and 1C, the valve body 17 and the housing 12 are formed such that the seat diameter r₁ becomes smaller than the hole diameter r₂ of the back pressure chamber 27, and the pressure receiving area A1 is smaller than the pressure receiving area A2. Therefore, the acting force generated by the primary pressure p₁ corresponding to the difference in area between the pressure receiving area A1 and the pressure receiving area A2 acts on the valve body 17 toward the closed position. On this account, the speed of the valve body 17 moving toward the closed position when the supply of the current to the solenoid coil 33 is shut off increases, and the shutoff performance is improved.

Since the acting force generated by the primary pressure p₁ acts toward the closed position, sealing surface pressure between the valve body 17 and a seat portion of the seat member 16 increases. Therefore, each of the electromagnetic pressure regulating valves 1C and 1D can firmly close the valve passage 46 or 46A so as to prevent the fuel gas from leaking from the primary side to the secondary side.

The electromagnetic pressure regulating valves 1B and 1C according to Embodiments 3 and 4 respectively have the same operational advantages as the electromagnetic pressure regulating valves 1 and 1A according to Embodiments 1 and 2.

### Embodiment 5

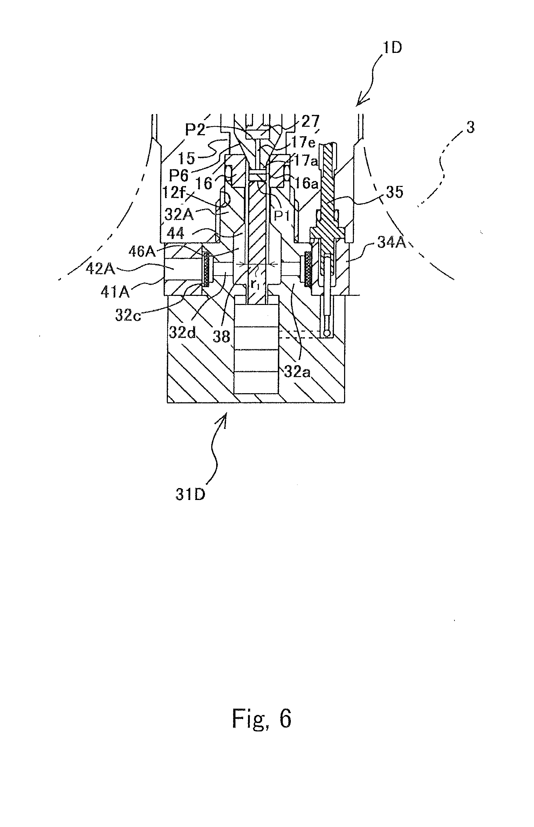

The pressure regulating valve 1D according to Embodiment 5 is similar to the electromagnetic pressure regulating valve 1A according to Embodiment 2. As shown in Fig. 6, the pressure regulating valve 1D according to Embodiment 5 includes a piezoelectric actuator 31D instead of the electromagnetic proportional solenoid 31. The piezoelectric actuator 31D that is the valve body driving unit is constituted by a piezoelectric element (for example, a piezo element). The piezoelectric actuator 31D generates a driving force corresponding to an applied voltage and causes the valve body 17 to move in the open position direction via the push rod 38 to open the valve passage 46A. At this time, the opening degree of the valve passage 46A corresponds to the generated driving force, and the pressure regulating valve 1D can regulate the secondary pressure p₂ to pressure corresponding to the applied voltage applied to the piezoelectric actuator 31D.

Other than the above, the pressure regulating valve 1D according to Embodiment is the same in configuration as the electromagnetic pressure regulating valve 1A according to Embodiment 2. Thus, the pressure regulating valve 1D according to Embodiment 5 has the same operational advantages as the electromagnetic pressure regulating valve 1A according to Embodiment 2.

### Embodiment 6

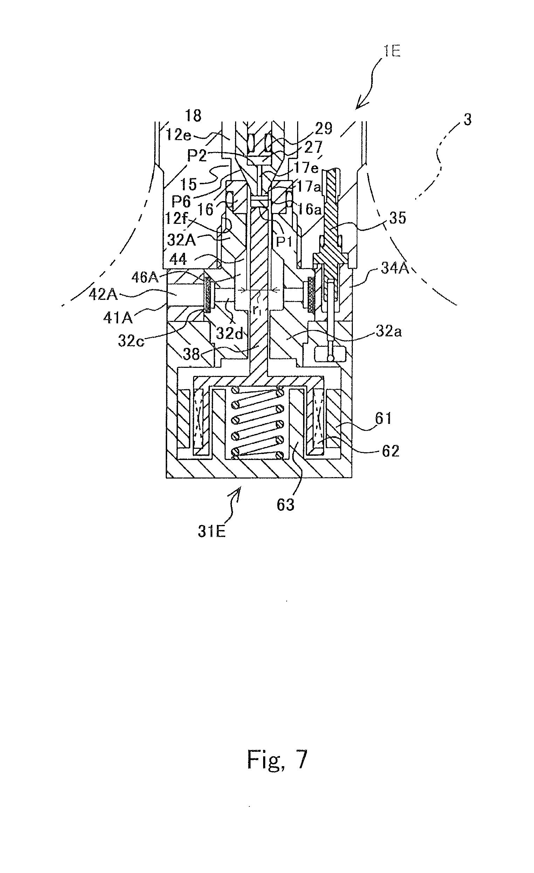

The pressure regulating valve 1E according to Embodiment 6 is similar to the electromagnetic pressure regulating valve 1A according to Embodiment 2. As shown in Fig. 7, the pressure regulating valve 1E according to Embodiment 6 includes a force motor 31E instead of the electromagnetic proportional solenoid 31. The force motor 31E that is the valve body driving unit is configured such that a moving coil 62 is inserted in a cylindrical permanent magnet 61. When the current is supplied to the moving coil 62, the magnetizing force corresponding to the supplied current is generated. By this magnetizing force, the moving coil 62 moves in a yoke 63. By the movement of the moving coil 62, the valve body 17 is pushed in the open position direction by the push rod 38 provided integrally with the moving coil 62. Thus, the valve passage 46A opens. At this time, the opening degree of the valve passage 46A corresponds to the generated magnetizing force, and the pressure regulating valve 1E can regulate the secondary pressure p₂ to pressure corresponding to the current supplied to the force motor 31E.

Other than the above, the pressure regulating valve 1E according to Embodiment 6 is the same in configuration as the electromagnetic pressure regulating valve 1A according to Embodiment 2. Thus, the pressure regulating valve 1E according to Embodiment 6 has the same operational advantages as the electromagnetic pressure regulating valve 1A according to Embodiment 2.

### Other Embodiment

In the present embodiment, the secondary pressure p₂ of the pressure return chamber 25 is received by the diaphragm seal 21. However, the present embodiment is not limited to the diaphragm seal, and the secondary pressure p₂ may be received by a low-pressure sealing member, such as an O ring.

### Industrial Applicability

The present invention is applicable to a gas pressure regulating valve capable of regulating the pressure of a high-pressure fuel gas to pressure corresponding to a supplied current.

### Reference Signs List

| | |
|---|---|
| 1, 1A to 1C | electromagnetic pressure regulating valve |
| 1D, 1E | pressure regulating valve |
| 3 | tank |
| 12 | housing |
| 12b | secondary port |
| 17 | valve body |
| 19 | bearing member accommodating space |
| 20 | bearing member |
| 21 | diaphragm seal |
| 22 | low-pressure sealing member |
| 25 | pressure return chamber |
| 26 | seal rod |
| 27 | back pressure chamber |
| 28 | return spring |
| 29 | high-pressure sealing member |
| 30 | communication passage |
| 31 | electromagnetic proportional solenoid |
| 31D | piezoelectric actuator |
| 31E | force motor |
| 41, 41A | primary port |
| 46, 46A | valve passage |

## Claims

1. A gas pressure regulating valve provided at an opening portion of a tank and configured to regulate pressure of a fuel gas filled in the tank and output the fuel gas, the gas pressure regulating valve comprising:
a housing including a valve passage connected to a primary port and a secondary port;
a valve body provided in the housing and configured to move between a closed position where the valve body closes the valve passage and an open position where the valve body opens the valve passage to adjust an opening degree of the valve passage;
a return spring configured to bias the valve body toward the closed position;
a valve body driving unit provided in the opening portion of the tank and configured to apply a driving force corresponding to an applied voltage or an applied current to valve body against the biasing of the return spring to cause the valve body to move toward the open position;
a pressure return chamber formed in the housing and connected to the secondary port;
a bearing member provided in a gap between the valve body and the housing and configured to slidingly support the valve body;
first and second sealing members respectively provided on both sides of the bearing member and configured to respectively seal both sides of the gap; and
a seal rod inserted in the valve body from a base end of the valve body so as to be movable relative to the valve body and configured to form a back pressure chamber connected to the primary port, the back pressure chamber being formed between the seal rod and the valve body, wherein:
the first sealing member receives pressure of the pressure return chamber in a direction against the driving force and causes the valve body to move toward the closed position in accordance with the received pressure;
a communication passage connected to the secondary port is formed between the seal rod and the valve body so as to be closer to a base end side of the valve body than the back pressure chamber; and
a third sealing member is provided between the communication passage and the back pressure chamber so as to seal therebetween.

2. The gas pressure regulating valve according to claim 1, wherein:
the valve body includes a first pressure receiving surface configured to receive primary pressure at the primary port toward the open position and a second pressure receiving surface configured to receive pressure of the back pressure chamber toward the closed position; and
a pressure receiving area of the first pressure receiving surface is equal to a pressure receiving area of the second pressure receiving surface.

3. The gas pressure regulating valve according to claim 1, wherein:
the valve body includes a first pressure receiving surface configured to receive primary pressure at the primary port toward the open position and a second pressure receiving surface configured to receive pressure of the back pressure chamber toward the closed position; and
a pressure receiving area of the first pressure receiving surface is smaller than a pressure receiving area of the second pressure receiving surface.

4. The gas pressure regulating valve according to any one of claims 1 to 3, wherein:
the first sealing member is a diaphragm seal; and
the second sealing member is a low-pressure seal having low frictional resistance.

5. The gas pressure regulating valve according to any one of claims 1 to 4, wherein the third sealing member is a high-pressure seal which has low frictional resistance and in which a difference between starting resistance and sliding resistance is small.

6. The gas pressure regulating valve according to any one of claims I to 5, wherein the gas pressure regulating valve is a normally closed valve configured such that when the applied voltage or the applied current applied to the valve body driving unit is zero, the valve body is located at the closed position by the return spring.
